# FASCICULE DE BREVET EUROPEEN

(11) **EP 1 233 880 B1**
(45) Date de publication et mention de la délivrance du brevet: **05.11.2003**
(21) Numéro de dépôt: 00985365.6
(22) Date de dépôt: 30.11.2000
(51) Int. Cl.: B60N 2/02

(54) **Système de gestion des mouvements d'un ou plusieurs sièges de véhicule**
Bewegungssteuerungssystem für einen oder mehrere Kraftfahrzeugsitze
System for Controlling the Movement of One or Several Vehicle Seats

(30) Priorité: 01.12.1999 FR 9915135
(43) Date de publication de la demande: 28.08.2002
(73) Titulaire: P.G.A. Electronic, 36000 Châteauroux (FR)
(72) Inventeur: PIAULET, Jean-François, 36130 Deols (FR); LEGRAS, Hugues, 36100 Issoudun (FR); GROUSSIN, Laurent, 36330 Le Poinconnet (FR); MOULIN, Pascal, 36100 Issoudun (FR); BERTHOULOUX, Alain, 36000 Chateauroux (FR)
(74) Mandataire: Poulin, Gérard
(86) Numéro de dépôt international: FR0003343
(87) Numéro de publication internationale: WO01040013

(56) Documents cités:
- FR-A- 2 467 437
- FR-A- 2 748 240
- FR-A- 2 781 293
- US-A- 4 669 780
- US-A- 5 254 924
- US-A- 5 822 707
- US-A- 5 930 152

## Description

### Domaine de l'invention

L'invention concerne un système pour gérer les mouvements des différents éléments d'un ou de plusieurs siège(s) de véhicule.

L'invention s'applique à de nombreux types de sièges, tels que les sièges de véhicules automobiles ou bien les sièges de trains ou de bateaux ; elle s'applique, en particulier, aux sièges d'avions.

### Etat de la technique

Il existe actuellement de nombreux types de sièges pour véhicule permettant de modifier la position d'un des éléments du siège par rapport à un autre élément du siège. En particulier, les sièges d'avions sont tous étudiés pour que le passager puisse s'installer dans une position semi-couchée ou bien dans une position assise droite (notamment pour le décollage et l'atterrissage) ou bien dans des positions intermédiaires. Classiquement, dans les sièges d'avion, les éléments mobiles du siège sont le dossier, le repose-jambes et le repose-pieds, l'assise étant généralement fixe. Ces éléments sont souvent actionnés les uns par rapport aux autres par un système mécanique ou par un système électro-mécanique, c'est-à-dire dont la commande est électrique et l'actionnement mécanique.

Mais, quel que soit le type d'actionnement, il est toujours nécessaire d'avoir des butées qui limitent le mouvement des différents éléments, d'une part, pour ne pas endommager le matériel et, d'autre part, pour veiller à la sécurité et au confort des passagers. Ces butées sont souvent mécaniques. Elles peuvent aussi être réalisées au moyen de capteurs de fin de course, placés aux extrémités de la tige de l'actionneur.

Le brevet US-A-5 887 949 décrit justement un siège d'avion, dans lequel les positions du repose-pieds et du repose-jambes sont contrôlées, afin que le repose-pieds ne heurte pas le sol lorsque le repose-jambes passe de la position allongée à la position d'assise. Dans ce dispositif, le contrôle de position se fait au moyen d'un capteur de fin de courses. Ces capteurs de fin de courses, tout comme les butées mécaniques, sont fixés sur le siège, soit lors de la fabrication du siège, soit au moment de l'installation du siège dans l'avion. Cependant, il est parfois nécessaire de modifier l'emplacement d'une butée ou la valeur limite d'un capteur de fin de course, après que le siège ait été installé, par exemple, dans le cas où l'implantation de l'avion nécessite une modification de la position verticale d'un dossier. Dans ce cas, la seule possibilité est de modifier la valeur limite de la butée, sur place. En conséquence, si les butées de tous les sièges d'un avion doivent être modifiées, cela entraîne un coût important, aussi bien en temps qu'en argent.

Il existe, par ailleurs, un siège de véhicule automobile, dans lequel la position de l'assise du siège et la position du dossier sont calculées l'une par rapport à l'autre, afin que la position globale du siège respecte des critères de sécurité.

Pour cela, les mouvements de l'assise et du dossier, l'un par rapport a l'autre, sont contrôlés par des moteurs électriques et détectés par des potentiomètres. Un tel siège est décrit dans la demande de brevet FR-A-2 736 879.

Cependant, ce dispositif permet le contrôle du positionnement de l'assise et du dossier d'un siège de façon dépendante l'un par rapport à l'autre. Ce dispositif ne peut donc pas être adapté à un siège comportant de nombreux éléments (appui-tête, repose-jambes, repose-pieds, accoudoirs, etc.), qui peuvent être bougés indépendamment les uns des autres.

Le document FR-A-2 748 240 (correspondant au préambule de la revendication indépendante) décrit un système d'actionnement d'éléments de siège, dans lequel chaque élément est déplacé au moyen d'un actionneur. Les actionneurs de deux sièges voisins sont commandés par une unité de traitement centralisée, reliée par ailleurs à un clavier ou à un lecteur de carte affecté à chacun des sièges. Des positions préréglées des différents éléments de chacun des sièges peuvent ainsi être mémorisées, entre des positions extrêmes.

### Exposé de l'invention

L'invention a justement pour but de remédier aux inconvénients des dispositifs décrits précédemment.

A cette fin, elle propose un dispositif de gestion des mouvements des différents éléments d'un siège, dans lequel chaque élément peut être déplacé dêpendamment ou indépendamment des autres, selon la position désirée par le passager.

Plus précisément, l'invention concerne un système de gestion des mouvements limites modifiables des éléments d'au moins un siège de véhicule comportant, à chaque liaison située entre un premier et un second éléments du siège, un moyen d'actionnement du premier élément par rapport au second élément, associé à des moyens de mémorisation et de contrôle des positions limites de chaque élément, caractérisé en ce qu'il comprend des moyens de mémorisation et de contrôle des forces de transmission limites du moyen d'actionnement de chaque élément et une unité de commande connectée à chacun des moyens de mémorisation et de contrôle, ladite unité de commande étant intégrée dans un moyen d'actionnement.

Selon une variante de l'invention, les moyens de mémorisation et de contrôle comprennent un système de recopie potentiométrique des positions limites. Selon une autre variante, ils comprennent un système de recopie impulsionnel des positions avec recalage limites.

Selon un mode de réalisation de l'invention, les moyens de mémorisation et de contrôle comprennent un système de recopie, par mesure de courant, des forces de transmission limites.

Selon un autre mode de réalisation, ils comprennent un système de recopie des forces de transmission limites utilisant des jauges de contraintes.

Selon encore un autre mode de réalisation, ils comprennent un système de recopie potentiométrique des forces de transmission limites.

De façon avantageuse, les valeurs des positions limites et les valeurs des forces de transmission limites sont modifiables à partir de l'unité de commande.

L'invention s'applique aussi à la gestion des mouvements de plusieurs sièges. Dans ce cas, l'unité de commande de chaque siège est connectée, par au moins un bus, aux unités de commande des autres sièges et/ou à au moins une unité centrale. Dans ce cas, les valeurs de forces de transmission limites et des positions limites peuvent être modifiables à partir de l'unité centrale.

### Brève description des figures

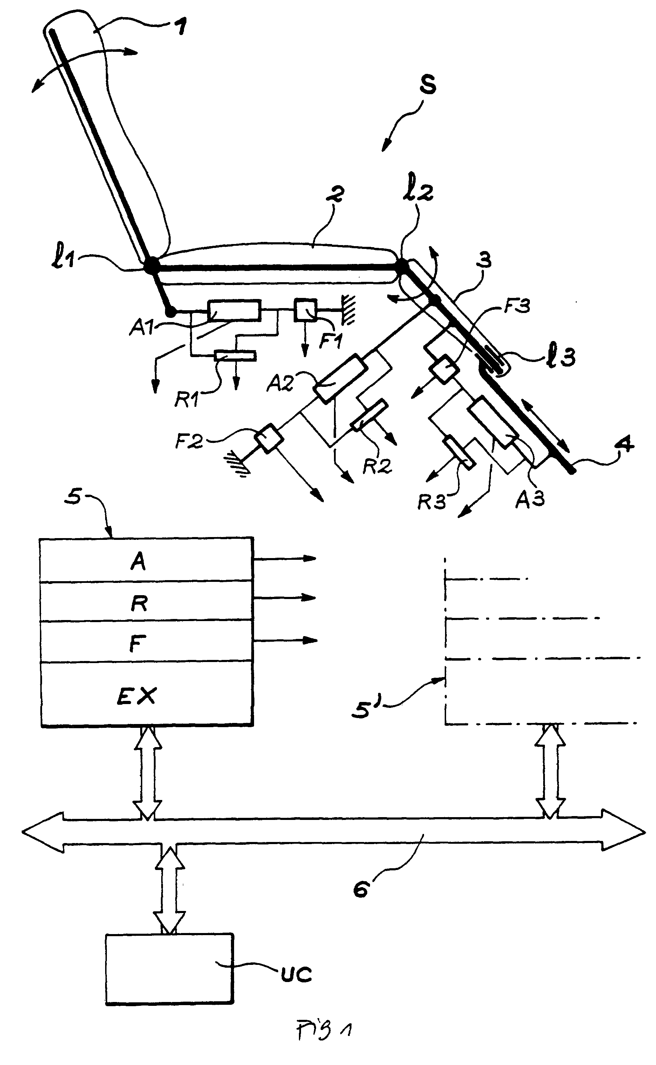

La figure représente schématiquement un exemple de siège, conforme à l'invention, munis de moyens d'actionnement et de commande permettant de gérer les mouvements des éléments de ce siège.

### Description détaillée des modes de réalisation de l'invention

L'invention concerne un système pour gérer les mouvements des éléments d'un ou de plusieurs sièges de véhicule, en contrôlant les positions limites de chaque élément du siège, ainsi que les forces de transmission limites des moyens d'actionnement assurant le mouvement d'un élément par rapport à un autre élément du siège.

Pour mieux comprendre l'invention, nous avons représenté schématiquement, sur la figure, un siège ainsi que les différents moyens qui permettent de mouvoir les éléments mobiles de ce siège.

Le siège, représenté sur la figure, est référencé S ; il comporte un dossier 1, une assise 2, un repose-jambes 3 et un repose-pieds 4. Sur ce siège S, on voit que le dossier 1 s'articule par un mouvement de rotation autour du bord de l'assise 2, que le repose-jambes s'articule également par un mouvement de rotation autour de l'autre bord de l'assise 2 et enfin que le repose-pieds 4 peut se translater par rapport au repose-jambes 3. Sur cet exemple de siège, il y a donc trois liaisons entre les quatre éléments de ce siège. Ces liaisons sont les suivantes :
. la liaison 11, qui est une articulation entre le dossier 1 et l'assise 2 ;
. la liaison 12 est également une articulation entre l'assise 2 et le repose-jambes 3 ; et
. la liaison 13 est une liaison de translation entre le repose-jambes 3 et le repose-pieds 4.

Chacune de ces liaisons 11, 12 et 13 est obtenue, grâce à un système comprenant, d'une part, un moyen d'actionnement, respectivement, A1, A2 et A3, et, d'autre part, des moyens de mémorisation et de contrôle des positions limites des éléments et des forces limites de transmission, référencés (R1, F1), (R2, F2), (R3, F3). Toutes ces liaisons 11, 12 et 13 sont commandées à partir d'une unité de commande, référencée 5.

Pour une meilleure compréhension de l'invention, on va maintenant décrire, de façon plus détaillée, une des liaisons entre deux éléments du siège, à savoir la liaison 11. Celle-ci est réalisée par l'ensemble suivant : un moyen d'actionnement A1, appelé aussi « actionneur », un système de recopie des positions limites R1 et un système de recopie des forces de transmission limites F1. Dans le cas de la liaison 11, la force de transmission est le couple de rotation.

Le fonctionnement de cette liaison 11 est le suivant : lorsqu'un passager veut modifier la position du dossier, il active une commande de modification de la position du dossier (non représentée sur la figure par mesure de simplification) et choisit l'inclinaison du dossier 1, par rapport à l'assise 2. Cette modification de la position du dossier 1 par rapport à l'assise 2 est réalisée, grâce à l'actionneur A1, tant que ni la position limite enregistrée dans R1 ni la force limite enregistrée par F1 n'est atteinte.

Toutes les autres liaisons du siège, c'est-à-dire les liaisons 12 et 13 fonctionnent de la même façon que la liaison 11, excepté que dans le cas de la liaison 13, où il s'agit d'un mouvement de translation et non de rotation d'un élément par rapport à un autre. En effet, dans le cas d'une rotation, l'actionnement se fait selon un axe. Dans le cas d'une translation, l'actionnement se fait selon une surface. De même, dans le cas du gonflage de coussins, par exemple pour le réglage des appui-lombaires, l'actionnement se fait selon une surface.

Selon un mode de réalisation de l'invention, le système de recopie des positions limites peut être de type potentiométrique ou bien impulsionnel à recalage.

La recopie des forces limites peut être réalisée par la relecture de la consommation du courant circulant dans l'actionneur, ou bien au moyen de jauges de contraintes, ou encore au moyen d'un potentiomètre.

Chacun des ensembles d'actionnement A et de mémorisation des positions et des forces limites (R, F) est relié à une unité de commande, référencée 5. Cette unité de commande comporte plusieurs niveaux de commande, à savoir un niveau A destiné à la gestion des actionneurs A1, A2 et A3, un niveau R destiné à la gestion des limites de courses (autrement dit, à la gestion des positions limites des différents éléments du siège) dont le rôle est de gérer les systèmes de recopie R1, R2 et R3, et un niveau F destiné à la gestion des limites de forces, dont le rôle est de gérer les systèmes de recopie des forces limites F1, F2 et F3. Cette unité de commande 5 comporte, de plus, un niveau de communications internes et externes au siège, appelé niveau « EX » et dont le rôle sera expliqué ultérieurement.

Selon le mode de réalisation de l'invention, représenté sur cette figure, le système comporte un bus de liaison 6, qui assure la communication des informations entre l'unité de commande 5 associée au siège S, et les unités de commande associées aux autres sièges, référencés S'. Ce bus de liaison 6 permet également la transmission d'informations vers une unité centrale, référencée UC, ou vers plusieurs unités centrales, ou vers tout autre dispositif connecté à ce bus.

Le niveau EX de l'unité de commande S assure alors, d'une part, l'échange des données au sein du siège et, d'autre part, l'échange de données vers les autres sièges ou vers des unités centrales. Plus précisément, cet étage de communication EX est relié à un bus de liaisons 6 qui assure la liaison d'informations entre les différents sièges et les différentes unités centrales qui peuvent être connectées sur le réseau.

Selon le mode de réalisation représenté sur la figure, l'unité de commande 5 est connectée aux actionneurs, au système de recopie des positions limites et au système de recopie des forces limites. Dans ce cas, l'unité de commande peut être placée soit dans le siège, soit à l'extérieur du siège.

Selon un autre mode de réalisation de l'invention, l'unité de commande 5 peut être intégrée dans l'un ou l'autre des actionneurs du siège.

Le système de l'invention permet ainsi de modifier les différentes limites de positions des éléments et les différentes limites des forces de transmission des moyens d'actionnement d'un siège, électroniquement, à partir de l'unité de commande 5, ou bien à partir de l'unité centrale UC. Ces modifications des valeurs limites des positions et des forces peuvent donc se faire à distance, sans nécessiter le déplacement d'un opérateur sur le site.

En outre, dans le cas où le siège possède des moyens d'actionnement débrayables manuellement, le système de l'invention assure la mémorisation de la position absolue, lorsque le débrayage a été actionné.

De plus, lorsque plusieurs sièges sont connectés ensemble par l'intermédiaire d'un bus 6, il est possible de modifier les valeurs limites des positions et les forces de transmission de tous les sièges, par une même opération, à partir de l'unité centrale UC. On peut ainsi obtenir un réglage uniforme ou sélectif de tous les sièges.

Pour des raisons de simplification de la figure, le siège représenté sur la figure comporte quatre éléments, à savoir un dossier, une assise, un repose-jambes et un repose-pieds. Toutefois, l'invention peut s'appliquer aussi aux mouvements d'un appui-tête ou bien aux mouvements des accoudoirs. Il peut également s'appliquer au mouvement des têtières, et des capotes sur les sièges de luxe, ainsi qu'aux mouvements des appui-lombaires (mouvements de la profondeur, de la hauteur ou de la latéralité de ces appuis lombaires), l'actionnement pouvant être mécanique (comme celui décrit sur la figure), mais aussi pneumatique, hydraulique ou électrique. Ce système peut également être appliqué à un mouvement de l'assise du siège, lorsque celle-ci est mobile.

## Revendications

1. Système de gestion des mouvements limites modifiables des éléments d'au moins un siège de véhicule comportant, à chaque liaison (11, 12, 13) située entre un premier et un second éléments du siège, un moyen d'actionnement (A1, A2, A3) du premier élément par rapport au second élément, associé à des moyens de mémorisation et de contrôle (R1, R2, R3) des positions limites de chaque élément, **caractérisé en ce qu'**il comprend des moyens de mémorisation et de contrôle (F1, F2, F3) des forces de transmission limites du moyen d'actionnement de chaque élément et une unité de commande (5) connectée à chacun des moyens de mémorisation et de contrôle, ladite usité de commande (5) étant intégrée dans un moyen d'actionnement (A1, A2, A3).

2. Système de gestion des mouvements limites selon la revendication 1, **caractérisé en ce que** les moyens de mémorisation et de contrôle comprennent un système de recopie potentiométrique des positions limites.

3. Système de gestion des mouvements limites selon la revendication 1, **caractérisé en ce que** les moyens de mémorisation et de contrôle comprennent un système de recopie impulsionnel des positions avec recalage limites.

4. Système de gestion des mouvements limites selon l'une quelconque des revendications 1 à 3, **caractérisé en ce que** les moyens de mémorisation et de contrôle comprennent un système de recopie des forces de transmission limites par mesure(s) de courant.

5. Système de gestion des mouvements limites selon l'une quelconque des revendications 1 à 3, **caractérisé en ce que** les moyens de mémorisation et de contrôle comprennent un système de recopie des forces de transmission limites par jauges de contraintes.

6. Système de gestion des mouvements limites selon l'une quelconque des revendications 1 à 3, **caractérisé en ce que** les moyens de mémorisation et de contrôle comprennent un système de recopie potentiométrique des forces de transmission limites.

7. Système de gestion des mouvements limites selon l'une quelconque des revendications 1 à 6, **caractérisé en ce que** les valeurs des positions limites et les valeurs des forces de transmission limites sont modifiables à partir de l'unité de commande.

8. Système selon l'une quelconque des revendications 1 à 7 pour la gestion des mouvements limites modifiables des éléments de plusieurs sièges (S, S'), **caractérisé en ce que** l'unité de commande de chaque siège est connectée, par au moins un bus (6), aux unités de commande des autres sièges et/ou à au moins une unité centrale (UC).

9. Système selon la revendication 8, **caractérisé en ce que** les valeurs de positions limites et les valeurs de forces de transmission limites sont modifiables à partir de l'unité centrale.

## Patentansprüche

1. Steuersystem für modifizierbare begrenzte Bewegungen von Elementen mindestens eines Fahrzeugsitzes umfassend, an jeder zwischen einem ersten und einem zweiten Element des Sitzes angeordneten Verbindung (I1, I2, I3), ein Speicher- und Steuermitteln (R1, R2, R3) für begrenzte Positionen jedes Elements zugeordnetes Aktuatormittel (A1, A2, A3) für das erste Element bezüglich des zweiten Elements,
**dadurch gekennzeichnet,**
**dass** es Speicher- und Steuermittel (F1, F2, F3) für begrenzte Übertragungskräfte der Aktuatormittel jedes Elements und eine mit jedem der Speicher- und Steuermittel verbundene Befehlseinheit (5) umfasst, wobei die Befehlseinheit (5) in einem Aktuatormittel (A1, A2, A3) integriert ist.

2. Steuersystem für begrenzte Bewegungen nach Anspruch 1,
**dadurch gekennzeichnet,**
**dass** die Speicher- und Steuermittel ein potenziometrisches Erfassungssystem der begrenzten Positionen umfassen.

3. Steuersystem für begrenzte Bewegungen nach Anspruch 1,
**dadurch gekennzeichnet,**
**dass** die Speicher- und Steuermittel ein Impulserfassungssystem der begrenzten Positionen mit Wiederholung umfassen.

4. Steuersystem für begrenzte Bewegungen nach einem der Ansprüche 1 bis 3,
**dadurch gekennzeichnet,**
**dass** die Speicher- und Steuermittel ein System zum Auslesen der begrenzten Übertragungskräfte durch Strommessung(en) umfassen.

5. Steuersystem für begrenzte Bewegungen nach einem der Ansprüche 1 bis 3,
**dadurch gekennzeichnet,**
**dass** die Speicher- und Steuermittel ein Erfassungssystem der begrenzten Übertragungskräfte durch Dehnungsmessvorrichtungen umfassen.

6. Steuersystem für begrenzte Bewegungen nach einem der Ansprüche 1 bis 3,
**dadurch gekennzeichnet,**
**dass** die Speicher- und Steuermittel ein potenziometrisches Erfassungssystem der begrenzten Übertragungskräfte umfassen.

7. Steuersystem für begrenzte Bewegungen nach einem der Ansprüche 1 bis 6,
**dadurch gekennzeichnet,**
**dass** die Werte der begrenzten Positionen und die Werte der begrenzten Übertragungskräfte durch die Befehlseinheit modifizierbar sind.

8. System nach einem der Ansprüche 1 bis 7 für die Steuerung von modifizierbaren begrenzten Bewegungen von Elementen mehrerer Sitze (S, S'),
**dadurch gekennzeichnet,**
**dass** die Befehlseinheit jedes Sitzes über mindestens einen Bus (6) mit den Befehlseinheiten der anderen Sitze und/oder mit mindestens einer Zentraleinheit (UC) verbunden ist.

9. System nach Anspruch 8,
**dadurch gekennzeichnet,**
**dass** die Werte der begrenzten Positionen und die Werte der begrenzten Übertragungskräfte durch die Zentraleinheit modifizierbar sind.

## Claims

1. System for the management of modifiable limit movements of the elements of at least one vehicle seat comprising, at each connection (11, 12, 13) placed between a first and second elements of the seat, an actuating means (A1, A2, A3) for the first element with respect to the second element, associated with means (R1, R2, R3) for storing and checking limit positions of each element, **characterized in that** it comprises means (F1, F2, F3) for storing and checking limit transmission forces of the actuating means of each element and a control unit (5) connected to each of the storage and checking means, said control unit (5) being integrated into an actuating means (A1, A2, A3).

2. System for managing limit movements according to claim 1, **characterized in that** the storage and checking means comprise a potentiometric system for limit position copying.

3. System for managing limit movements according to claim 1, **characterized in that** the storage and checking means comprise a pulse system for limit position copying with relocking.

4. System for managing limit movements according to any one of the claims 1 to 3, **characterized in that** the storage and checking means comprise a system for copying limit transmission forces by current measurement.

5. System for managing limit movements according to any one of the claims 1 to 3, **characterized in that** the storage and checking means comprise a system for copying limit transmission forces using strain gauges.

6. System for managing limit movements according to any one of the claims 1 to 3, **characterized in that** the storage and checking means comprise a system for the potentiometric copying of limit transmission forces.

7. System for managing limit movements according to any one of the claims 1 to 6, **characterized in that** the limit position values and the values of the limit transmission forces are modifiable from the control unit.

8. System according to any one of the claims 1 to 7 for managing modifiable limit movements of elements of several seats (S, S'), **characterized in that** the control unit of each seat is connected by at least one bus (6) to the control units of the other seats and/or to at least one central unit (UC).

9. System according to claim 8, **characterized in that** the limit position values and the values of the limit transmission forces are modifiable from the central unit.
